# EUROPEAN PATENT APPLICATION

(11) **EP 1 842 768 A2**
(43) Date of publication of application: **10.10.2007**
(21) Application number: 07251532.3
(22) Date of filing: 05.04.2007
(51) Int. Cl.: B62M 3/08

(54) **Pedal cover**

(30) Priority: 07.04.2006 GB 0607094
(71) Applicant: Parkes, Gabriella, 131 Canalot Studios 222 Kensal Road London W10 5BN (GB)
(72) Inventor: Parkes, Gabriella, 131 Canalot Studios 222 Kensal Road London W10 5BN (GB)
(74) Representative: Leckey, David Herbert

(57) **Abstract**

A cover 22 for a bicycle pedal comprises a generally U-shaped body 24 having a base 26 and a pair of side limbs 28, 30 projecting from the base. The inner walls of the side limbs 28, 30 and of the base 26 are provided with channels 32, 34 which, when the cover is positioned on the pedal, cover projections formed on the pedal that could otherwise cause damage to non-specialist footwear.

An opening 36 is also provided in each of the side limbs 28, 30 which accommodates reflectors present on the pedal, thereby allowing them to be seen, while at the same time preventing the reflectors from interfering with the proper positioning of the cover.

## Description

The present invention relates to a cover for a pedal, more particularly a cover for a bicycle pedal.

Modern day bicycles typically have pedals made from metal or a hard plastics material for durability. Moreover, upper and lower surfaces of the pedal are typically provided with projections in order to improve the grip provided by the pedal. For example, the pedal may be formed as a cage like construction, with the perimeter of the pedal being formed from relatively thin sections, with gripping projections formed in their upper and lower edges. These projections may, however, be quite sharp and if worn with non-specialist footwear may cause damage to that footwear.

The present invention seeks to overcome this problem and from a first aspect provides a cover for a bicycle pedal, said cover having a generally U-shaped body comprising a base and two limbs extending from said base, said limbs being adapted to engage over the upper and lower edges of the front and rear of a pedal.

A cover in accordance with the invention therefore is able to engage over the front and rear of the pedal, to cover any projections formed in the upper and lower surfaces of the pedal in those regions.

Preferably, the respective limbs comprise respective formations, preferably channels, formed in their inner sides for receiving the projections.

The inner side of each limb may also be recessed to accommodate any projections formed on the front and rear faces of the pedal. Pedals are usually provided with reflectors, which are typically mounted in a hard plastics housing affixed to the pedal in these locations. These housings may also cause damage to footwear. A recess is therefore preferably provided to accommodate any reflector provided on the front and rear faces of the pedal and which might otherwise interfere with proper positioning of the cover on the pedal.

Preferably the recess extends completely through the respective side limb such that while it may shield the reflector such that it does not cause damage to footwear, it allows the reflector to be seen through the limb of the pedal cover.

This is itself thought to be a novel arrangement so from a further aspect, the invention provides a pedal cover engaged over the a face of a pedal and comprising an opening allowing a reflector provided on said face to be viewed through the cover.

The respective limbs of the pedal cover may also comprise mounting locations e.g. recesses to receive additional reflectors, if so desired.

The base of the cover may also be provided with means for engaging over the upper and lower edges of a side of the pedal, in order to cover any projections provided in such edges of the pedal as well. In the preferred embodiment, a channel is provided, as in the side limbs, most preferably continuous with the side limb channels.

In order to allow the cover to be positioned over the pedal, the cover is preferably resilient such that it may flex to allow the limbs to be positioned on the pedal. Preferably, therefore, the cover is moulded from a resilient material such as an elastomer, such as rubber.

The upper and lower surfaces of the cover limbs at least may be textured, e.g. ridged, so as to provide adequate grip for a user while avoiding damage to their footwear.

The upper and lower surfaces of the cover limbs at least may be textured, e.g. ridged, so as to provide adequate grip for a user while avoiding damage to their footwear.

From a yet further broad aspect the invention provides a pedal cover comprising a resilient, U-shaped body whose respective limbs can be fitted over the front and rear faces of the pedal.

From a yet further broad aspect, the invention provides a generally U-shaped pedal cover for covering projections on said pedal.

These projections may be present on the top, bottom or side surfaces of the pedal and/or on front or rear faces of the pedal. They could therefore include the castellation like projections referred to earlier or reflector housings.

From a yet further broad aspect, the invention provides pedal cover for covering reflector housings provided on a pedal.

From a yet further broad aspect, the invention provides a cover for a bicycle pedal, said cover having a body adapted to engage over the upper and lower edges of a face of a pedal.

A preferred embodiment of the invention may now be described with reference to the accompanying drawings in which:
Figure 1 shows a typical pedal;
Figure 2 shows a first perspective view of a pedal cover in accordance with the invention;
Figure 3 shows a second perspective view of a pedal cover in accordance with the invention;
Figure 4 shows a first view of the cover of Figures 2 and 3 in position on a bicycle pedal; and
Figure 5 shows a second view of the cover of Figures 2 and 3 in position on a bicycle pedal.

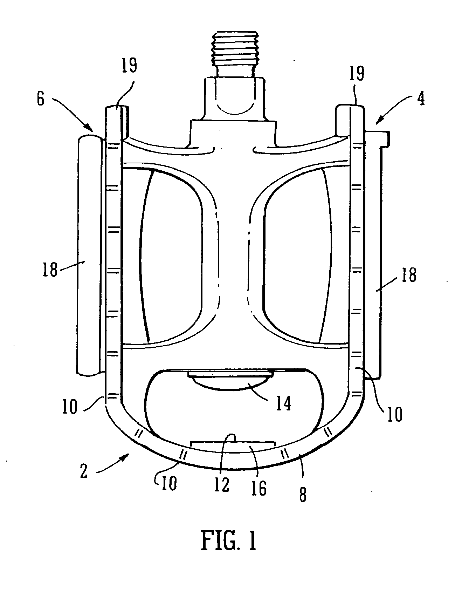

With reference to Figure 1, a pedal 2 comprises a cage like body with a front face 4, rear face 6 and side face 8. The respective faces 4, 6, 8 have castellation like projections 10 formed on their upper and lower edges to provide grip for a user's foot. The pedal material is typically metal or hard plastics, which means that it may do damage to a user's shoes or heels or even injure a user if their ankle or foot strikes the pedal.

The side face 8 of the pedal is formed with a through bore 12, which gives access to the spindle 14 of the pedal. A ring 16 projects inwardly around the bore 12.

Reflectors 18 are mounted to the front and rear faces 6, 8 of the pedal 2, while the front and rear faces 6, 8 also have respective projections 19.

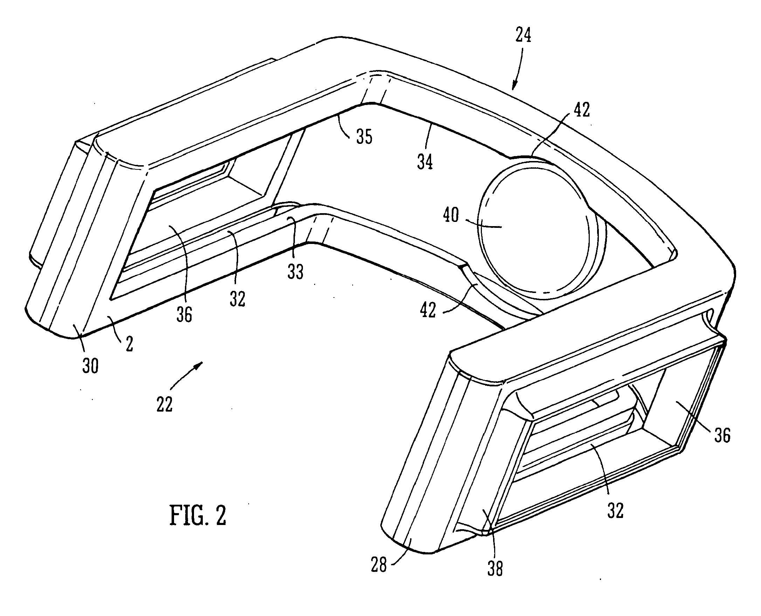

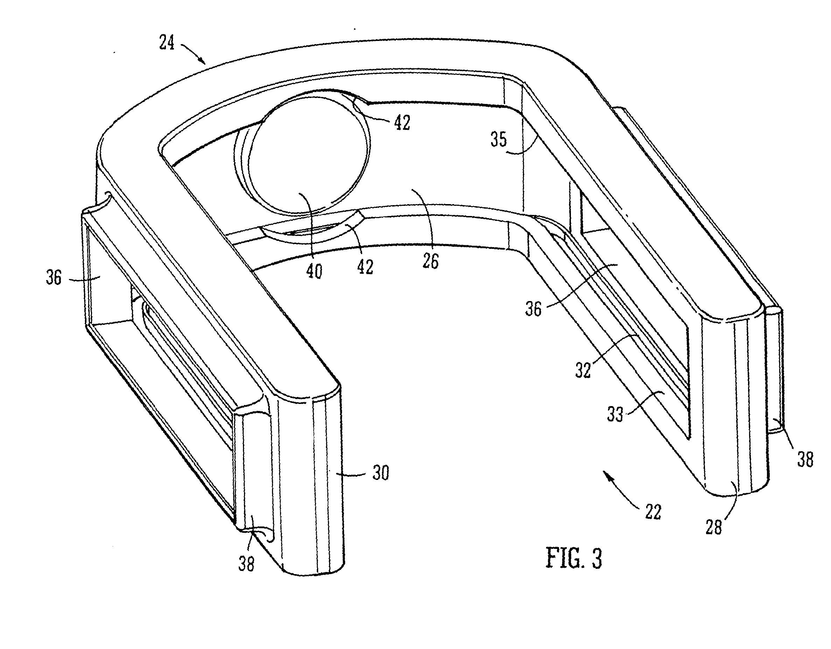

With reference to Figure 2 and 3, a pedal cover 22 in accordance with the invention comprises a generally U-shaped body 24 having a base 26 and a pair of side limbs, 28, 30 projecting from the base 26.

The body 24 is moulded in a resilient, relatively soft material, such as rubber, for reasons which will become apparent below.

The inner walls of the side limbs 28, 30 and base 26 of the of the body 24 are provided with respective upper and lower channels 32, 34. Only the lower channel 32 is visible in the Figures, but the upper channel 34 is formed in a similar manner to the lower channel 32. Upper and lower lips 33, 35 define the outer wall of the channels 32, 34. The channels 32, 34 are joined by a vertical channel (not shown) at the outer end of each side limb 28, 30 such that a continuous channel is formed in the inner wall of the cover 22.

Each side limb is also formed with a through opening 36 outwardly of the channels 32, 34. Respective ribs 38 are formed on the outer wall of each side limb around the respective openings 36.

The base 26 of the body 24 is provided with a projecting boss 40, with scallop shaped cut outs 42 also being provided in the lips 33, 35 concentrically with the boss 40.

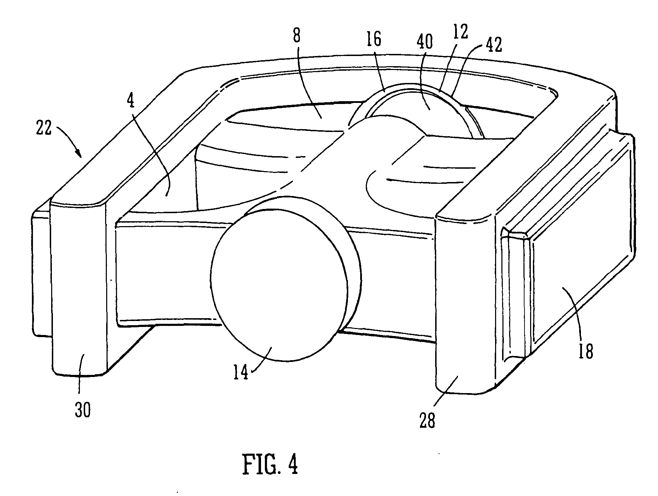

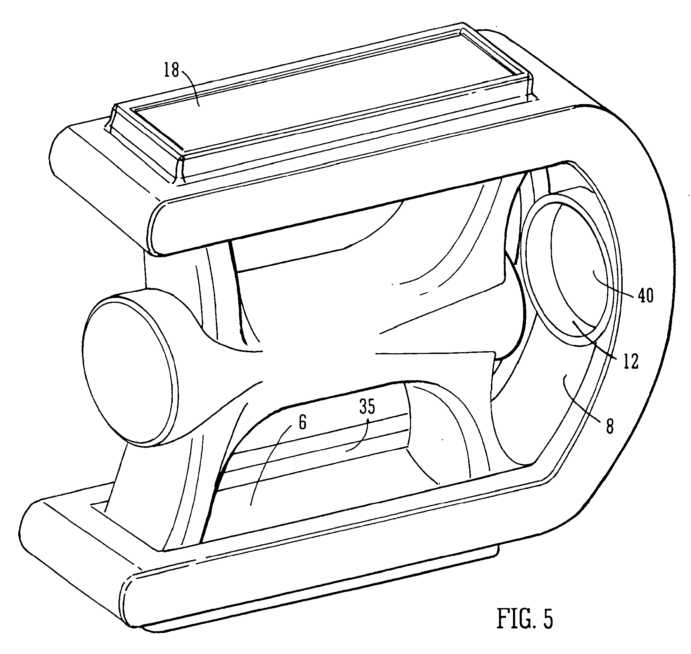

Referring now to Figures 4 and 5, the cover 22 fits over the bicycle pedal 2 as shown.

In particular, the cover 22 is flexed over the pedal 2 such that the projections 10 on the pedal 2 are accommodated within the channels 32, 34. This prevents damage to a user's shoes and heels from these projections 10. The lips 33, 35 retain the cover on the pedal. Moreover, the projections 19 of the pedal 2 are accommodated within the vertical channels (not shown) of the cover 22 so as to retain the cover 22 in place.

The openings 36 within the side limbs accommodate the reflectors 18 so as to prevent the reflectors from interfering with proper positioning of the cover 22 on the pedal 2, while at the same time allowing the reflectors 18 to be seen.

The boss 40 formed in the cover base 26 is received within the pedal bore 12 while the cut-outs 42 engage around the ring 16 so as to assist in locating the cover 22 on the pedal 2.

It will be understood that the size of the cover 22 will be chosen to give the appropriate fit over a pedal 2. Thus covers may be provided in a range of pedal sizes.

It will also be understood that modifications can be made to the embodiment described above without departing from the scope of the invention. For example, the channels 32, 34 formed in the limbs 28, 30 may be open ended so that the cover 22 can be slid over the pedal 2. It is preferred however that the channels are closed as shown to retain the cover 22 on the pedal 2.

Also, the upper and lower surfaces of the cover 22 are shown as smooth. In other embodiments they may be provided with formations e.g. ridges or castellations which improve the grip afforded by the cover 22.

It is also within the scope of the invention that upper and lower surfaces of the cover 22 extend either partly or fully across the space between the limbs 28, 30. In the context of the embodiment described, however, the arrangement would still have to permit the limbs 28, 30 to be flexed to fit over the pedal 2.

Also, while the embodiment described is adapted to receive relatively thin walled pedals, it will be appreciated that the type of construction described can easily be adapted to any pedal construction.

The cover base 26 can also be provided with openings for cosmetic or material saving purposes and indeed further bosses for locating with the pedal 2.

The openings 36 in the side limbs 28, 30 may be closed at their outer ends, in which case further reflectors may be suitably provided on the cover 22. Alternatively, the cover 22 could be transparent in which case the reflector could be viewed through the cover 22.

## Claims

1. A cover (22) for a bicycle pedal, said cover having a generally U-shaped body (24) comprising a base (26) and two limbs (28,30) extending from said base, said limbs being adapted to engage over the upper and lower edges of the front (4) and rear (6) of a pedal (2).

2. The cover of claim 1, wherein each of said limbs (28,30) comprise a means (32,34) for covering projections formed on the upper and lower edges of the front (4) and rear (6) of the pedal (2).

3. The cover of claim 2, wherein said means (32,34) for covering projections comprises a formation formed in the inner side of said limbs (28,30) for receiving the projections.

4. The cover of claim 1, 2 or 3, wherein said base (26) is adapted to engage over the upper and lower edges of the side (8) of the pedal (2).

5. The cover of claim 4, wherein said base (26) comprises a means (32,34) for covering projections formed on the upper and lower edges of the side (8) of the pedal (2).

6. The cover of claim 5, wherein said means (32,34) for covering projections comprises a formation formed in the inner side of said base (26) for receiving the projections.

7. The cover of claim 3 or 6, wherein said formation comprises a channel (32,34).

8. The cover of any preceding claim, wherein the inner side of each of said limbs (28,30) is recessed for accommodating projections formed on the front (4) and rear (6) faces of the pedal (2).

9. The cover of any preceding claim, further comprising at least one recess (36) for accommodating a reflector (18) provided on the pedal (2).

10. The cover of claim 9, wherein said at least one recess (36) is provided in one of said limbs (28,30).

11. The cover of claim 10, wherein said at least one recess (36) extends completely through said limb (28,30) to form an opening.

12. The cover of any preceding claim, wherein said base (26) is adapted to engage over the upper and lower edges of the side (8) of the pedal (2), and wherein the base (26) comprises a projecting boss (40) that, in use, engages with a through bore (12) of the pedal (2) to assist in locating the cover (22) on the pedal.

13. The cover of any preceding claim, wherein said cover (22) is moulded from a resilient material.

14. The cover of claim 13, wherein said resilient material is an elastomer.

15. The cover of any preceding claim, wherein the upper and lower surfaces of said limbs (28,30) are textured.

16. A cover (22) for a bicycle pedal, said cover having a body (24) adapted to engage over the upper and lower edges of a face of a pedal (2).

17. A cover (22) for a bicycle pedal, said cover being adapted to engage over at least one face of a pedal (2) and comprising an opening (36) allowing a reflector (18) provided on said face to be viewed through the cover.

18. A pedal cover (22) comprising a resilient, U-shaped body (24) whose respective limbs (28,30) can be fitted over the front (4) and rear (6) faces of the pedal (2).

19. A generally U-shaped pedal cover (22) for covering projections on said pedal (2).

20. A pedal cover (22) for covering reflector housings (18) provided on a pedal (2).
